# EUROPEAN PATENT SPECIFICATION

(11) **EP 2 627 833 B1**
(45) Date of publication and mention of the grant of the patent: **12.04.2017**
(21) Application number: 11832810.3
(22) Date of filing: 27.09.2011
(51) Int. Cl.: E02D 3/11, E01C 23/14, F24J 3/08, E01F 5/00

(54) **DEVICE FOR HEAT EXCHANGE**
WÄRMEAUSTAUSCHVORRICHTUNG
DISPOSITIF D'ÉCHANGE DE CHALEUR

(30) Priority: 14.10.2010 NO 20101427
(43) Date of publication of application: 21.08.2013
(73) Proprietor: Heatwork AS, 8505 Narvik (NO)
(72) Inventor: MARKUSSEN, Almar, N-8522 Beisfjord (NO)
(74) Representative: Tofting, Arild
(86) International application number: PCT/NO2011/000272
(87) International publication number: WO 2012/050454

(56) References cited:
- CA-A1- 1 124 147
- US-A- 5 181 655
- US-A- 5 181 655
- US-A- 5 449 113
- US-A- 5 838 880
- US-A1- 2009 025 902
- US-A1- 2010 218 912

## Description

### The field of the invention

The present invention relates to a device for heat exchange. More particularly, the invention relates to a device for heat exchange in a drainage system. The invention also relates to a device for heat exchange on a building and construction site.

### Background

EP 1777349 (applicant HeatWork AS) describes a system for thawing a frozen area of ground comprising a container for storing a heating medium, which is circulated in a hose deployed for heating the ground. A boiler is provided with a burner for heating up the heating medium, where the boiler is connected to the container for storing the heating medium, and where a pump is employed for circulating the heating medium through the hose placed on the ground, which has to be heated. The system comprises several hoses, which are interconnected in order to provide an effective thawing of a substantial area of ground.

Drainage systems for draining surface water from roads, buildings etc. are vulnerable to periods of frost which have a lower temperature or longer duration than the climate for which the drainage system is designed. In particular, variation between cold temperature and precipitation in the form of rain can cause these drainage systems to completely freeze up, with the result that infrastructure such as roads, railways, buildings etc. near the frozen drainage systems becomes flooded by water.

The system described in EP 1777349 is not suitable for thawing frozen drainage systems, since this system requires thawing from the surface of the ground. The system is therefore ineffective for thawing drainage systems buried beneath the earth's surface, since the earth between the earth's surface and the drainage system has to be thawed first.

US 5449113 discloses a probe for circulating heated water for thawing frozen ground. The probe is a portion of a mobile heating system including a plurality of hose sections. The probe includes a T-connection having a fluid inlet section, a first fluid outlet section, and a second fluid outlet section. An elongate outer tube has an ingress port affixed to the first fluid outlet section. The elongate outer tube includes a closed penetrating end for insertion into a frozen ground surface. An inner tube is positioned inside the T-connection and the outer tube. US 5838880 discloses a ground heating system comprising an internal combustion engine which has a shaft output and an exhaust gas stream. An electric alternator/generator is driven by the shaft output of the engine. A working fluid is provided for transferring heat to the ground. A heat exchanger receives the exhaust gas from the internal combustion engine and transfers waste heat from the exhaust gas to the working fluid. An electric heating element is provided for converting some of the electric output of the generator into heat and transferring this heat to the working fluid. A pump circulates the working fluid through a ground-engaging heat exchanger.

US 2010/218912 discloses a subterranean ground heat exchange system and CA 1124147 discloses a frost removal system.

US 5181655 discloses a mobile heating system for thawing frozen ground. The system comprises elongated heating probes which are inserted in the ground and hot water is circulated through them in order to thaw the ground. If a pipe is located under the ground, it is still thawed from the surface. This system not very efficient or flexible with respect to arranging the heating probes etc.
The usual way of thawing frozen drainage systems is to spray steam into an accessible end of the frozen drainage system in order to thaw or de-ice the drainage system, by the use of salt, the use of electric/heating cables, or excavators. These methods are not very effective and may take a very long time. Furthermore, some of these operations have to be monitored continuously and/or conducted by an operator.

US 2009/0025902 shows a similar device for heat exchange where probes are inserted into the ground.

Common to these devices is that it is cumbersome to assemble and disassemble the pipes.
The object of the present invention is to provide a device for heat exchange in a drainage system, which is more efficient than current solutions. Another object is that the device should have a closed system, without the supply of water or other liquids to the actual drainage system. The system will also be well suited for thawing long ditches and pipe sections.

A further object is to provide a device which is flexible with regard to the drainage system in which it is to be placed.
Another object is to provide a robust and reliable coupling device for such a device.
On a building and construction site hardening of concrete is a process which is crucial for the quality of the finished concrete. Temperature and moisture are parameters which influence the hardening process, and particularly severe cold is undesirable. The present invention is therefore also related to heat exchange to concrete in order to control the temperature of the concrete during hardening. Other objects and areas of application are thawing for graves in churchyards, thawing and frost protection of aggregates and building materials, heat transfer to boreholes etc.

### Summary of the invention

The present invention relates to a device for heat exchange in a drainage system, comprising:
- a heat exchange element where the heat exchange element comprises an external pipe device and an internal pipe device, where the internal pipe device is provided inside the external pipe device;
- a coupling device which provides a fluid-communicating coupling between the heat exchange element, a first fluid connector and a second fluid connector;
such that a heat exchange medium can circulate through the external pipe device (10), the internal pipe device (20) and the coupling device (3);
where the coupling device comprises an external coupling interface for coupling the heat exchange element to the second fluid connector and an internal coupling interface for coupling the heat exchange element to the first fluid connector;
where the external pipe device comprises a first end connected to the external coupling interface and a second end which is closed;
where the internal pipe device comprises a first end connected to the internal coupling interface and a second end which is open;
where the device is configured so that a heat exchange medium can circulate through the first fluid connector, the internal pipe device, the external pipe device and the second fluid connector;
where the external pipe device comprises at least one pipe element which is curved or angled and at least one pipe element which is substantially cylindrical; where the internal pipe device comprises a flexible pipe element, where the coupling device comprises a body with a cylindrical protruding portion, where the cylindrical protruding portion has a substantially circular end surface and where the internal coupling interface comprises an internally threaded portion in a first, circular opening in the substantially circular end surface.
In an aspect, the internal pipe device comprises a pipe attachment device for fastening the flexible pipe element to the internal coupling interface.
In an aspect, the pipe attachment device comprises a swivel device.
In an aspect, the external coupling interface comprises an externally threaded area in the cylindrical protruding portion.

In an aspect, the circular opening is in fluid connection with a first side opening for connection to the first fluid connector.

In an aspect, the coupling device comprises a second opening in the circular end surface, where the second opening is in fluid connection with a second side opening for connection to the second fluid connector.

In an aspect, the second end of the internal pipe device is located at a distance close to the second end of the external pipe device.

In an aspect, the external pipe device is rigid. However, it is possible for the external pipe device to be partially flexible and still have at least one pipe element which is curved or angled and at least one pipe element which is substantially cylindrical.

In an aspect, the external pipe device is made of aluminium or a similar material.
The present invention also relates to a drainage system comprising a surface water-bearing body, where the drainage system comprises an element as defined above provided inside or adjacent to at least parts of the surface water-bearing body.

### Detailed description

Embodiments of the invention will now be described in detail with reference to the attached drawings, in which:
Fig. 1 is a perspective view of a first embodiment;
Fig. 2 is a split view of the embodiment in fig. 1;
Fig. 3 is a cross section of the embodiment in fig. 1;
Fig. 4 is a perspective view of the coupling device in fig. 1;
Fig. 5 is a cross section of the coupling device in fig. 4;
Fig. 6a illustrates how the invention can be used for thawing a side drain under a roadway;
Fig. 6b illustrates a detail in fig. 6a;
Fig. 7 illustrates a second embodiment;
Fig. 8a is a side view of an embodiment of the invention for placing in a side drain under a road, where the external pipe elements are interconnected by means of threaded connections;
Fig. 8b illustrates a cross section of fig. 8a;
Fig. 9a is a side view of an embodiment of the invention for placing in a side drain under a road, where the external pipe elements are interconnected by means of sleeve couplings glued to each other;
Fig. 9b illustrates a cross section of fig. 9a;
Fig. 9c illustrates an enlargement of a glued sleeve coupling (area D) from fig. 9b.

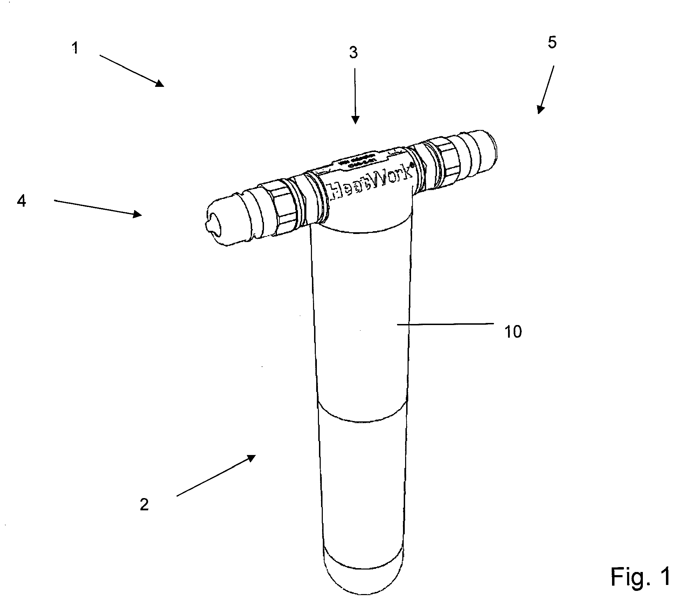

We now refer to fig. 1, which illustrates an embodiment of a device 1 for heat exchange in or with a drainage system.

The expression drainage system refers here to systems, which conduct surface water, for example precipitation in the form of rainwater or melted snow/ice, water-bearing channels in the form of streams, rivers etc., water from water leakages etc. Examples of drainage systems are drainage systems such as culverts, side drains, drainage pipes etc., which are buried in the ground. A drainage system may also comprise a ditch filled with drainage material such as sand, gravel or the like.

On a building site where concrete has to be poured, the concrete may be mixed on the building site. Aggregates such as sand and crushed stones for the concrete will often be stored at the building site. Under cold conditions, these aggregates could freeze together with water, thereby making it difficult to handle and measure out the correct amount of material. Furthermore, the water content in the concrete plays a part in determining the properties of the concrete, and this becomes more difficult if the material contains frozen water.

In this connection, a drainage system comprises a surface water-bearing body such as culverts, side drains, drainage pipes etc. as mentioned above. The surface water-bearing body may also comprise a quantity of material in the form of gravel, sand, crushed stones, or other drainage materials.

The device 1 comprises a heat exchange element 2, a coupling device 3, a first fluid connector 4 and a second fluid connector 5, as illustrated in fig. 1.

The heat exchange element 2 exchanges heat with the environment, such as the drainage system described above. The heat exchange element 2 comprises an external pipe device 10 and an internal pipe device 20.

The internal pipe device 20 is provided inside the external pipe device 10.
In the first embodiment, the external pipe device 10 is rigid, i.e. it is made of a stiff material. It is therefore able to withstand external influences and there is no obstacle to the circulation of a liquid. The external pipe device 10 is made of a material suitable for heat exchange with the environment. The external pipe device 10 may be made of aluminium or a similar material.

The external pipe device 10 comprises a first end 10a connected to the coupling device 3 and a second end 10b which is closed.

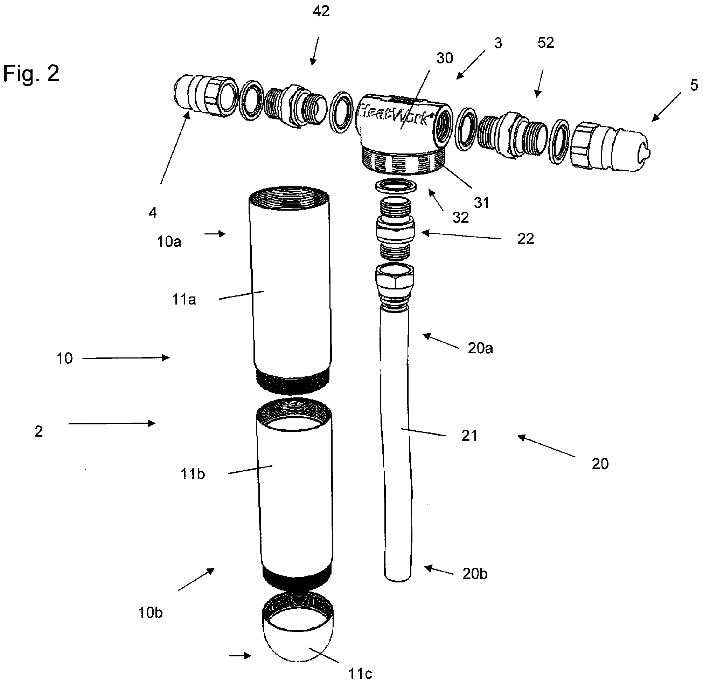

The external pipe device 10 may comprise several pipe elements 11. Fig. 2 shows that the external pipe device 10 may comprise two substantially cylindrical pipe elements 11 a, 11 b and an end pipe element 11 c which closes the second end 10b of the pipe device 10. The pipe elements 11 a, 11 b, 11c can be screwed together by means of respective internal and external threaded portions. In this way, the length of the heat exchange element 2 can be varied according to requirements by screwing pipe elements 11 on or off. It is also possible to employ pipe elements 11, which are curved or angled in order to adapt the heat exchange element 2 to the drainage system.

In the first embodiment, the internal pipe device 20 comprises a flexible pipe element 21, i.e. it is made of a flexible material. For example, the pipe element 21 is made of a plastic material, rubber etc. An internal pipe device 20 with a flexible pipe element 21 is advantageous, particularly when curved or angled pipe elements 11 are used, since this simplifies assembly of the device 1, i.e. insertion of the internal pipe device 20 into the external pipe device 10.

The external pipe device 10 comprises a first end 10a connected to the coupling device 3 and a second end 10b which is closed.

The internal pipe device 20 comprises a first end 20a connected to the coupling device 3 and a second end 20b which is open.

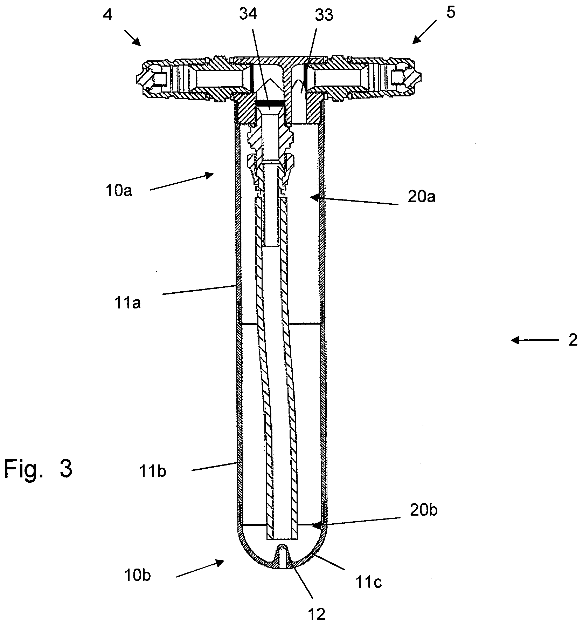

Fig. 3 shows how the internal pipe device 20 is provided inside the external pipe device 10. The second end 20b of the internal pipe device 20 is arranged at a distance close to the second end 10b of the external pipe device 10.

Fig. 3 also shows that the end pipe element 11c comprises an internal protruding boss 12, which projects towards the opening of the internal pipe device 20. The boss 12 contributes to advantageous circulation of heat exchange fluid between the internal pipe device 20 and the external pipe device 10.

The coupling device 3 will now be described with reference to figs. 2-5.

The coupling device 3 provides a fluid-communicating connection between the heat exchange element 2, the first fluid connector 4 and the second fluid connector 5. The coupling device comprises an external coupling interface 31 for connecting the heat exchange element 2 to the second fluid connector 5 and an internal coupling interface 32 for connecting the heat exchange element 2 to the first fluid connector 4. The first end 10a of the heat exchange element 2 is connected to the external coupling interface 31. The first end 20a of the internal pipe device 20 is connected to the internal coupling interface 32.

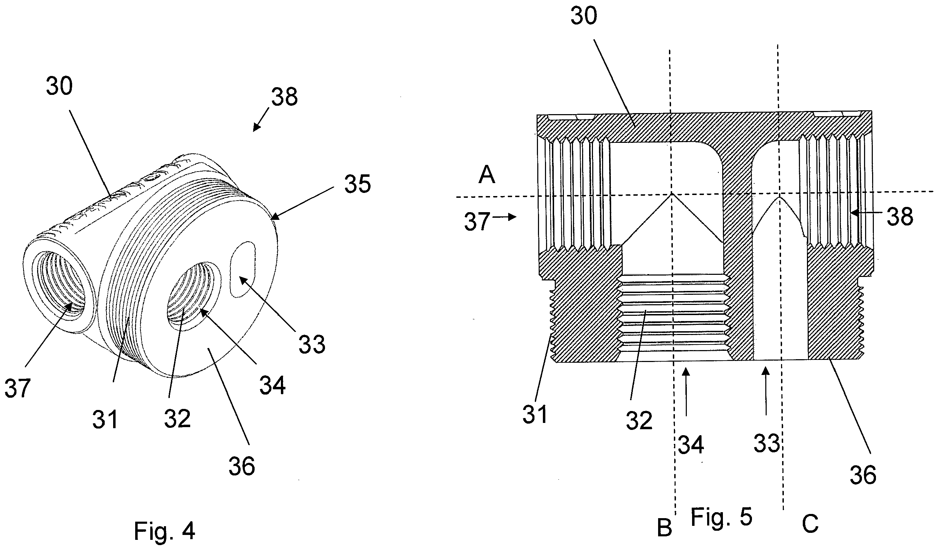

We now refer to figs. 4 and 5.

The coupling device 3 comprises a body 30 with two coupling interfaces in the form of side openings 37, 38 for connection to the first and the second fluid connectors 4, 5. Fig. 5 shows that the openings 37, 38 are provided on each side of the body 31. The axis A is a line between the centre of the opening 37 and the centre of the opening 38.

The body further comprises a cylindrical protruding portion 35, where the cylindrical protruding portion 35 has a substantially circular end surface 36. The end surface 36 here is parallel to the axis A.

The external coupling interface 31 for connection to the first end 10a of the external pipe device 10 comprises an externally threaded area in the cylindrical protruding portion 35. The externally threaded area in the external coupling interface 31 is adapted to be screwed together with an internally threaded portion in the pipe element 11 a.

The internal coupling interface 32 for connection to the first end 20a of the internal pipe device 20 comprises an internally threaded portion in a first, circular opening 34 in the circular end surface 36. The central longitudinal axis B of the opening 34 is perpendicular to the circular end surface 36. The circular opening 34 is in fluid connection with the first side opening 37 for connection to the first fluid connector 4. As illustrated in fig. 5 the fluid connection has a 90° bend.

The coupling device 3 comprises a second opening 33 in the circular end surface 36. The central longitudinal axis C of the opening 33 is perpendicular to the circular end surface 36. The second opening 33 is in fluid connection with the second side opening 38 for connection to the second fluid connector 5. As illustrated in fig. 5 the fluid connection has a 90° bend.

We now refer to fig. 2. Here we see that the internal pipe device 20 comprises a pipe attachment device 22 for fastening the pipe element 21 to the internal coupling interface 32, i.e. the internally threaded portion in the first opening 34. The pipe attachment device 22 may further comprise a swivel device for permitting rotation of the pipe element 21 relative to the coupling device 3, i.e. relative to the internal coupling interface 32. This makes it easier to screw together the external pipe device 10 without the internal pipe device being twisted, particularly when the external pipe device comprises curved or angled pipe elements. A pipe attachment device 42 is also provided for fastening the fluid connector 4 to the opening 37 in the coupling device 3. In a similar manner, a pipe attachment device 52 is provided for fastening the fluid connector 5 to the opening 38 in the coupling device 3.

The pipe attachment devices 22, 42, 52 may comprise screw connections, clamp connections and gaskets for providing a leak-proof and robust fluid connection between the coupling element 3 and the internal pipe device 20.
In the device 1 the heat exchange element 2 is configured so as to be provided inside or adjacent to the drainage system and the first and second fluid connectors 4, 5 are configured so as to be accessible outside the drainage system.

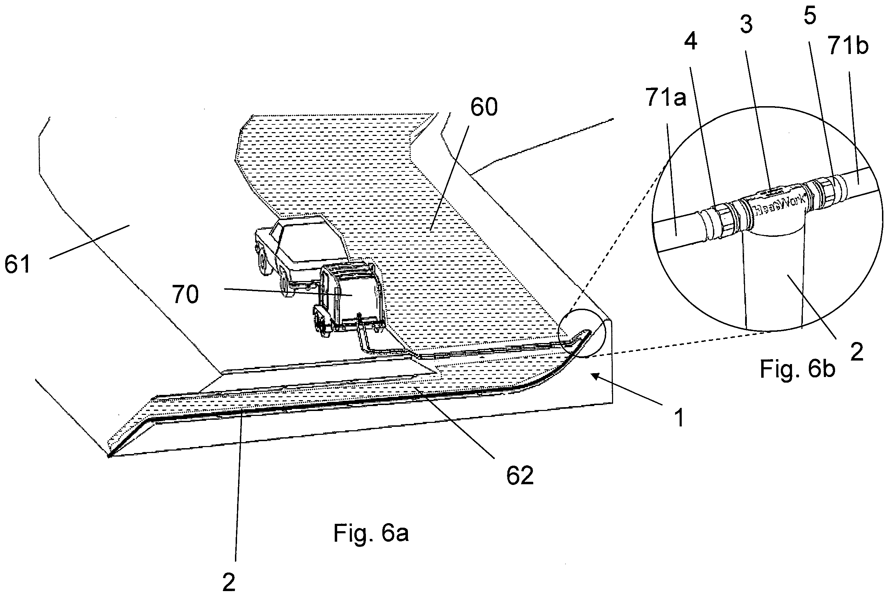

An example of this is illustrated in fig. 6. A drainage system is illustrated here comprising a water-bearing channel 60 beside a road 61, as well as a side drain 62 for carrying surface water from the channel 60 under the road 61. The heat exchange element 2 is provided down in the channel 60 and through the side drain 62. The first and second fluid connectors 4, 5 project up from the channel 60 and are therefore accessible outside the drainage system. In fig. 6a, we can see that the surface water in the channel 60 and the side drain 62 is frozen to ice.

The fluid connectors 4 and 5 are provided for connection to hose connections 71 a, 71 b connected to a heat exchange fluid-circulating system 70, for example a heat exchange fluid circulating system 70 as described in EP 1777349.

The device 1 is configured so as to enable a heat exchange medium to circulate through the first fluid connector 4, the internal pipe device 20, the external pipe device 10 and the second fluid connector 5. In fig. 6a, the heat exchange fluid-circulating system 70 supplies heated heat exchange fluid, for example water, to the fluid connector 4, whereupon the fluid is passed through the opening 37 on to the internal pipe device 20 via the opening 34. The fluid flows out of the opening in the internal pipe device 20 back through the external pipe device 10 to and on through the opening 33, on to the fluid connector 5 via the opening 38.

The result of this is that after a while the ice in parts of the channel 60 and in the side drain 62 will melt. This takes place without the supply of fluid to the environment, since the heat exchange fluid-circulating system 70 and the device 1 form a closed system.

In the above description, the expression heat exchange fluid is used. In some connections, the same system may also be employed for removing heat from drainage systems.

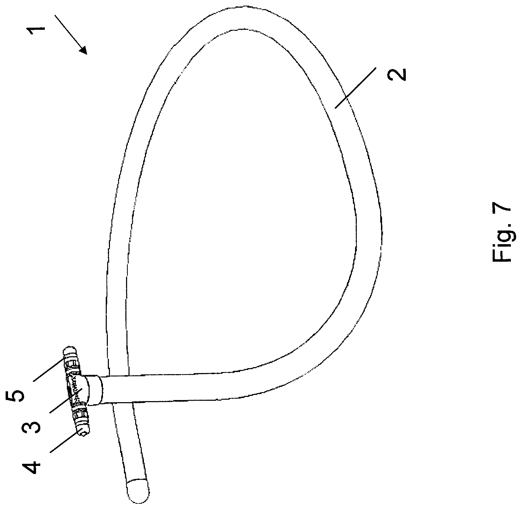

We now refer to fig. 7 and fig. 2, which illustrate an alternative embodiment of the invention. Here both the internal pipe device 20 and the external pipe device 10 in the heat exchange element 2 are made of a flexible material, which can be advantageous in some areas of application.

For example, the device in fig. 1 or fig. 7 may be pushed down into openings in the ground or into a mass (for example gravel, sand, crushed stones etc.) for heat exchange.

The device 1 may also be employed for exchange of heat on a building and construction site. For example, hardening of concrete is a process which is crucial for the quality of the finished concrete. Temperature and moisture are parameters, which influence the hardening process, and particularly severe cold is undesirable.

The device 1 in fig. 1 or fig. 7 may, for example, be arranged in contact with a shuttering board, which lies against the concrete during the hardening process. Heat can therefore be supplied to the concrete via the shuttering boards.

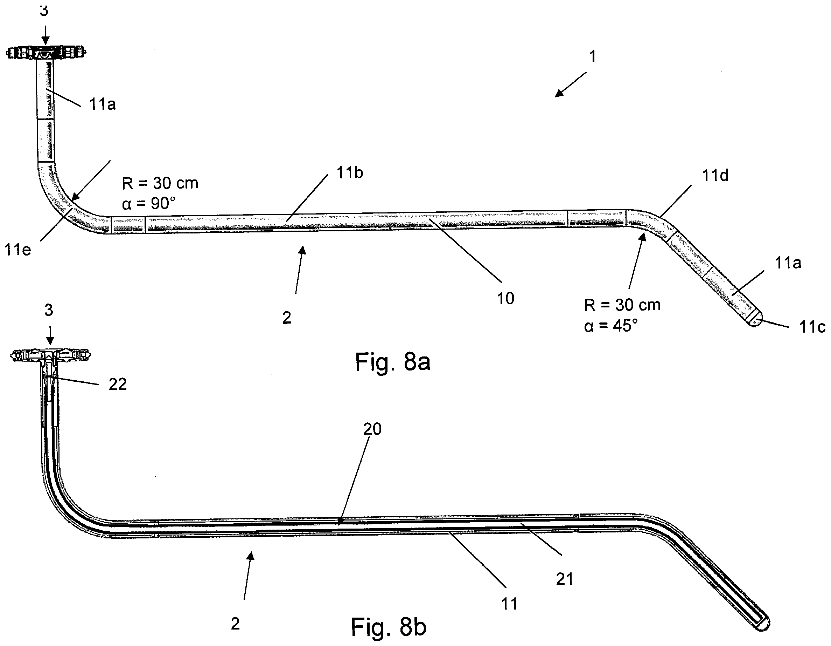

We now refer to fig. 8a which illustrates a typical profile of a device 1, which can be placed in a side drain for carrying surface water under a road. The external pipe device 10 comprises at least one pipe element 11, which is curved or angled and at least one pipe element 11 which is substantially cylindrical. In the figure there is a first pipe element 11d which has a curve radius R of 30 cm and with an angle α=45° and a second pipe element 11e which has a curve radius R of 30 cm and with an angle α=90°. Furthermore, the external pipe device 10 has several substantially cylindrical pipe elements. In the figure, it is shown that the external pipe device 10 has two substantially cylindrical pipe elements 11a of a first length and a substantially cylindrical pipe element 11 b of a second length. Finally, the external pipe device 10 comprises an end pipe element 11 c.

In this way standardised pipe elements 11 can be produced in advance, joined together in a simple manner, and adapted to the drainage system in which the device 1 is to be placed. As can be seen in fig 8a the coupling device 3 represents the highest point in the device 1, thereby making it accessible for connection when there is a need for thawing of the drainage system.

In fig. 8b, the internal pipe device 20 comprises a flexible pipe element 21. The flexible pipe element 21 is cut to the desired length and can thereby also be adapted to the drainage system in which the device 1 is to be placed.

The pipe attachment device 22 here also comprises a swivel device as mentioned above, which provides that the flexible pipe element 21 is not preventing the external pipe elements from being screwed together.

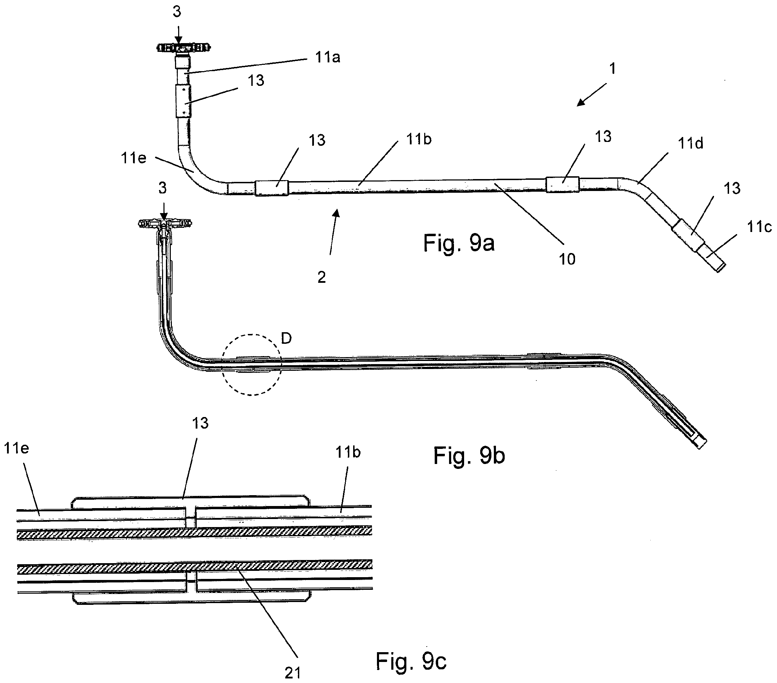

We now refer to figs. 9a-c. The device illustrated here corresponds substantially to that illustrated in figs. 8a and 8b. However, in this case the pipe elements 11 in the external pipe device 10 are not joined together by means of threaded connections. Instead, the pipe elements 11 are glued together. Fig 9c shows that the ends of the pipe elements 11 are inserted in connecting sleeves 13. The pipe elements 11 are attached to the connecting sleeves 13 by means of a jointing compound, for example glue or the like. The result of this is that the external pipe device 10 is also leak-proof. Alternatively the sleeve may be a part of one end of each of the pipe elements, i.e. that each pipe element 11 has a first end with a sleeve 13 for receiving a second end of a second pipe element 11 which are then fastened together.

It should be noted that in the preferred embodiment above the external pipe device is rigid. However, it is possible for the external pipe device to be partially flexible and still have at least one pipe element, which is curved or angled and at least one pipe element which is substantially cylindrical.

The present invention also relates to a surface water-bearing body, where the drainage system comprises a device 1 as described above provided inside or adjacent to at least parts of the surface water-bearing body.

## Claims

1. A heat exchange device (1) for heat exchange in a drainage system, comprising:
- a heat exchange element (2) where the heat exchange element (2) comprises an external pipe device (10) and an internal pipe device (20), where the internal pipe device (20) is provided inside the external pipe device (10);
- a coupling device (3) which provides a fluid-communicating coupling between the heat exchange element (2), a first fluid connector (4) and a second fluid connector (5); such that a heat exchange medium can circulate through the external pipe device (10), the internal pipe device (20) and the coupling device (3);
where the coupling device (3) comprises an external coupling interface (31) for coupling the heat exchange element (2) to the second fluid connector (5) and an internal coupling interface (32) for coupling the heat exchange element (2) to the first fluid connector (4);
where the external pipe device (10) comprises a first end (10a) connected to the external coupling interface (31) and a second end (10b) which is closed;
where the internal pipe device (20) comprises a first end (20a) connected to the internal coupling interface (32) and a second end (20b) which is open;
where the device (1) is configured so that a heat exchange medium can circulate through the first fluid connector (4), the internal pipe device (20), the external pipe device (10) and the second fluid connector (5);
where the external pipe device (10) comprises at least one pipe element (11) which is curved or angled and at least one pipe element (11) which is substantially cylindrical;
**characterised in that** the internal pipe device (20) comprises a flexible pipe element (21), that the coupling device (3) comprises a body (30) with a cylindrical protruding portion (35), that the cylindrical protruding portion (35) has a substantially circular end surface (36) and that the internal coupling interface (32) comprises an internally threaded portion in a first, circular opening (34) in the substantially circular end surface (36).

2. A device according to claim 1, where the internal pipe device (20) comprises a pipe attachment device (22) for fastening the flexible pipe element (21) to the internal coupling interface (32).

3. A device according to claim 2, where the pipe attachment device (22) comprises a swivel device.

4. A device according to any of the preceding claims, where the external coupling interface (31) comprises an externally threaded area in the cylindrical protruding portion (35).

5. A device according to claim 4, where the circular opening (34) is in fluid connection with a first side opening (37) for connection to the first fluid connector (4).

6. A device according to any of the preceding claims, where the coupling device (3) comprises a second opening (33) in the circular end surface (36), where the second opening (33) is in fluid connection with a second side opening (38) for connection to the second fluid connector (5).

7. A device according to any of the preceding claims, where the second end (20b) of the internal pipe device (20) is located at a distance close to the second end (10b) of the external pipe device (10).

8. A device according to any of the preceding claims, where the external pipe device (10) is rigid.

9. A device according to claim 8, where the external pipe device (10) is made of aluminium or a similar material.

10. A drainage system comprising a surface water-bearing body, where the drainage system comprises a device (1) according to one of the claims 1-9 provided inside or adjacent to at least parts of the surface water-bearing body.

## Patentansprüche

1. Wärmeaustauschvorrichtung (1) für den Wärmeaustausch in einem Entwässerungssystem, die aufweist:
- ein Wärmeaustauschelement (2), wobei das Wärmeaustauschelement (2) eine Außenrohrvorrichtung (10) und eine Innenrohrvorrichtung (20) aufweist, wobei die Innenrohrvorrichtung (20) innerhalb der Außenrohrvorrichtung (10) angeordnet ist;
- eine Kopplungsvorrichtung (3), die eine fluidkommunizierende Kopplung zwischen dem Wärmeaustauschelement (2), einem ersten Fluidanschluss (4) und einem zweiten Fluidanschluss (5) schafft, so dass ein Wärmeaustauschmedium durch die Außenrohrvorrichtung (10), die Innenrohrvorrichtung (20), und die die Kopplungsvorrichtung (3) hindurch zirkulieren kann;
wobei die Kopplungsvorrichtung (3) eine äußere Kopplungsschnittstelle (31) für die Kopplung des Wärmeaustauschelements (2) mit dem zweiten Fluidanschluss (5) und eine innere Kopplungsschnittstelle (32) für die Kopplung des Wärmeaustauschelements (2) mit dem ersten Fluidanschluss (4) aufweist;
wobei die Außenrohrvorrichtung (10) ein erstes Ende (10a), das mit der äußeren Kopplungsschnittstelle (31) verbunden ist, und ein zweites Ende (10b) aufweist, das verschlossen ist;
wobei die Innenrohrvorrichtung (20) ein erstes Ende (20a), das mit der inneren Kopplungsschnittstelle (32) verbunden ist, und ein zweites Ende (20b) aufweist, das offen ist;
wobei die Vorrichtung (1) derart eingerichtet ist, dass ein Wärmeaustauschmedium durch den ersten Fluidanschluss (4), die Innenrohrvorrichtung (20), die Außenrohrvorrichtung (10) und den zweiten Fluidanschluss (5) hindurch zirkulieren kann;
wobei die Außenrohrvorrichtung (10) zumindest ein Rohrelement (11), das gekrümmt oder abgewinkelt ist, und zumindest ein Rohrelement (11) aufweist, das im Wesentlichen zylindrisch ist;
**dadurch gekennzeichnet, dass** die Innenrohrvorrichtung (20) ein flexibles Rohrelement (21) aufweist, dass die Kopplungsvorrichtung (3) einen Körper (30) mit einem zylindrischen vorstehenden Abschnitt (35) aufweist,
dass der vorstehende Abschnitt (35) eine im Wesentlichen kreisförmige Endfläche (36) aufweist, und
dass die innere Kopplungsschnittstelle (32) einen Innengewindeabschnitt in einer ersten, kreisförmigen Öffnung (34) in der im Wesentlichen kreisförmigen Endfläche (36) aufweist.

2. Vorrichtung gemäß Anspruch 1, wobei die Innenrohrvorrichtung (20) eine Rohranbringungsvorrichtung (22) für die Befestigung des flexiblen Rohrelements (21) an der inneren Kopplungsschnittstelle (32) aufweist.

3. Vorrichtung gemäß Anspruch 2, wobei die Rohranbringungsvorrichtung (22) eine Schwenkvorrichtung aufweist.

4. Vorrichtung gemäß einem der vorstehenden Ansprüche, wobei die äußere Kopplungsschnittstelle (31) einen Außengewindebereich in dem zylindrischen vorstehenden Abschnitt (35) aufweist.

5. Vorrichtung gemäß Anspruch 4, wobei die kreisförmige Öffnung (34) in Fluidverbindung mit einer ersten Seitenöffnung (37) zur Verbindung mit dem ersten Fluidanschluss (4) ist.

6. Vorrichtung gemäß einem der vorstehenden Ansprüche, wobei die Kopplungsvorrichtung (3) eine zweite Öffnung (33) in der kreisförmigen Endfläche (36) aufweist, wobei die zweite Öffnung (33) in Fluidverbindung mit einer zweiten Seitenöffnung (38) zur Verbindung mit dem zweiten Fluidanschluss (5) ist.

7. Vorrichtung gemäß einem der vorstehenden Ansprüche, wobei das zweite Ende (20b) der Innenrohrvorrichtung (20) in einem Abstand nahe dem zweiten Ende (10b) der Außenrohrvorrichtung (10) angeordnet ist.

8. Vorrichtung gemäß einem der vorstehenden Ansprüche, wobei die Außenrohrvorrichtung (10) starr ist.

9. Vorrichtung gemäß Anspruch 8, wobei die Außenrohrvorrichtung (10) aus Aluminium oder einem ähnlichen Material hergestellt ist.

10. Entwässerungssystem, das einen Oberflächenwasser aufnehmenden Körper aufweist, wobei das Entwässerungssystem eine Vorrichtung (1) gemäß einem der Ansprüche 1-9 aufweist, welche innerhalb oder neben zumindest Teilen des Oberflächenwasser aufnehmenden Körpers angeordnet ist.

## Revendications

1. Dispositif d'échange de chaleur (1) pour l'échange de chaleur dans un système de drainage, comprenant :
- un élément d'échange de chaleur (2) dans lequel l'élément d'échange de chaleur (2) comprend un dispositif de tuyau externe (10) et un dispositif de tuyau interne (20), dans lequel le dispositif de tuyau interne (20) est disposé à l'intérieur du dispositif de tuyau externe (10) ;
- un dispositif de couplage (3) qui fournit un couplage de communication fluide entre l'élément d'échange de chaleur (2), un premier connecteur de fluide (4) et un second connecteur de fluide (5) ;
de sorte qu'un moyen d'échange de chaleur peut circuler au travers du dispositif de tuyau externe (10), du dispositif de tuyau interne (20) et du dispositif de couplage (3) ;
dans lequel le dispositif de couplage (3) comprend une interface de couplage externe (31) pour coupler l'élément d'échange de chaleur (2) au second connecteur de fluide (5) et une interface de couplage interne (32) pour coupler l'élément d'échange de chaleur (2) au premier connecteur de fluide (4) ;
dans lequel le dispositif de tuyau externe (10) comprend une première extrémité (10a) connectée à l'interface de couplage externe (31) et une seconde extrémité (10b) qui est fermée ;
dans lequel le dispositif de tuyau interne (20) comprend une première extrémité (20a) connectée à l'interface de couplage interne (32) et une seconde extrémité (20b) qui est ouverte ;
dans lequel le dispositif (1) est configuré de sorte qu'un moyen d'échange de chaleur peut circuler au travers du premier connecteur de fluide (4), du dispositif de tuyau interne (20), du dispositif de tuyau externe (10) et du second connecteur de fluide (5) ;
dans lequel le dispositif de tuyau externe (10) comprend au moins un élément de tuyau (11) qui est incurvé ou angulé et au moins un élément de tuyau (11) qui est essentiellement cylindrique ;
**caractérisé en ce que** le dispositif de tuyau interne (20) comprend un élément de tuyau flexible (21), **en ce que** le dispositif de couplage (3) comprend un corps (30) avec une partie saillante cylindrique (35), **en ce que** la partie saillante cylindrique (35) a une surface d'extrémité essentiellement circulaire (36) et **en ce que** l'interface de couplage interne (32) comprend une partie filetée interne dans une première ouverture circulaire (34) dans la surface d'extrémité essentiellement circulaire (36).

2. Dispositif selon la revendication 1, dans lequel le dispositif de tuyau interne (20) comprend un dispositif de fixation de tuyau (22) pour attacher l'élément de tuyau flexible (21) à l'interface de couplage interne (32).

3. Dispositif selon la revendication 2, dans lequel le dispositif de fixation de tuyau (22) comprend un dispositif à pivot.

4. Dispositif selon l'une quelconque des revendications précédentes, dans lequel l'interface de couplage externe (31) comprend une zone filetée externe dans la partie de saillie cylindrique (35).

5. Dispositif selon la revendication 4, dans lequel l'ouverture circulaire (34) est en connexion fluide avec une première ouverture latérale (37) pour la connexion au premier connecteur de fluide (4).

6. Dispositif selon l'une quelconque des revendications précédentes, dans lequel le dispositif de couplage (3) comprend une seconde ouverture (33) dans la surface d'extrémité circulaire (36), dans lequel la seconde ouverture (33) est en connexion fluide avec une seconde ouverture latérale (38) pour la connexion au second connecteur de fluide (5).

7. Dispositif selon l'une quelconque des revendications précédentes, dans lequel la seconde extrémité (20b) du dispositif de tuyau interne (20) est située à une distance proche de la seconde extrémité (10b) du dispositif de tuyau externe (10).

8. Dispositif selon l'une quelconque des revendications précédentes, dans lequel le dispositif de tuyau externe (10) est rigide.

9. Dispositif selon la revendication 8, dans lequel le dispositif de tuyau externe (10) est fabriqué en aluminium ou matériau similaire.

10. Système de drainage comprenant un corps porteur d'eau de surface, dans lequel le système de drainage comprend un dispositif (1) selon l'une quelconque des revendications 1 à 9 disposé à l'intérieur ou à côté d'au moins quelques parties du corps porteur d'eau de surface.
